# EUROPEAN PATENT APPLICATION

(11) **EP 4 554 289 A1**
(43) Date of publication of application: **14.05.2025**
(21) Application number: 23841732.3
(22) Date of filing: 20.02.2023
(51) Int. Cl.: H04W 52/02

(54) **ENERGY-SAVING CONTROL METHOD, AND ELECTRONIC DEVICE AND COMPUTER-READABLE STORAGE MEDIUM**

(30) Priority: 22.07.2022 CN 202210870878
(71) Applicant: ZTE Corporation, Shenzhen, Guangdong 518057 (CN)
(72) Inventor: SUN, Wei, Shenzhen, Guangdong 518057 (CN); LOU, Dushi, Shenzhen, Guangdong 518057 (CN)
(74) Representative: Savi, Massimiliano
(86) International application number: PCT/CN2023/077223
(87) International publication number: WO 2024/016654

(57) **Abstract**

Disclosed in the present disclosure are an energy-saving control method, an electronic device, and a computer-readable storage medium. The energy-saving control method comprises: dividing a coverage area of a first cell into a plurality of logical grids, and generating coverage association information for each logical grid (S110); and when a grid positioning result of a UE located in the first cell is acquired, generating, according to the grid positioning result and all the coverage area association information, a target energy-saving policy for controlling the energy-saving state of the first cell (S120).

## Description

### CROSS-REFERENCE TO RELATED APPLICATION

This application is filed on the basis of Chinese patent application No. 202210870878.5 filed July 22, 2022, and claims priority to the Chinese patent application, the entire contents of which are incorporated herein by reference.

### TECHNICAL FIELD

The present disclosure relates to the field of communication technology, and more particularly, to an energy-saving control method, an electronic device, and a computer-readable storage medium.

### BACKGROUND

Current cell shutdown energy-saving technologies require performing a conditional check to determine whether to enter an energy-saving state. However, since it is not possible to know in advance which overlapping coverage areas the User Equipment (UE) in the cell shares with other basic cells, the assumption is made that when the cell enters an energy-saving state, all UEs in the cell can migrate to other basic cells. This assumption implies that the load of the other basic cells must be sufficiently low to accommodate all the UEs from the current cell. In practical scenarios, the actual coverage conditions of the other basic cells may not support the migration of all UEs. In other words, the cell cannot guarantee that it will be able to enter an energy-saving state.

### SUMMARY

The following is a summary of the subject matter described in detail below. This summary is not intended to limit the scope of the claims.

Embodiments of the present disclosure provide an energy-saving control method, an electronic device, and a computer-readable storage medium.

In accordance with a first aspect of the present disclosure, an embodiment provides an energy-saving control method, which includes: dividing a coverage area of a first cell into a plurality of logical grids and generating coverage association information of each of the plurality of logical grids, the coverage association information is used to define a correspondence between the logical grid and a coverage area of a second cell; and in response to acquiring a grid positioning result of an User Equipment (UE) located in the first cell, generating a target energy-saving policy for controlling an energy-saving state of the first cell based on the grid positioning result and all the coverage association information, the grid positioning result is used to determine at least one of the plurality of logical grids in which the UE is currently located.

In accordance with a second aspect of the present disclosure, an embodiment provides an electronic device, which includes at least one processor, and at least one memory storing at least one program which, when executed by the at least one processor, causes the at least one processor to carry out the energy-saving control method as described above.

In accordance with a third aspect of the present disclosure, an embodiment provides a computer-readable storage medium, storing a processor-executable program which, when executed by a processor, causes the processor to carry out the energy-saving control method as described above.

Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a schematic diagram of an application scenario of the energy-saving control method in the related technology;
FIG. 2 is a flow diagram of the energy-saving control method provided by one embodiment of the present disclosure;
FIG. 3 is a flow diagram of the process of dividing the coverage area of the first cell into a plurality of logical grids and generating the coverage association information for each logical grid in the energy-saving control method provided by one embodiment of the present disclosure;
FIG. 4 is a flow diagram of the process of acquiring the measurement configuration result in the energy-saving control method provided by one embodiment of the present disclosure;
FIG. 5 is a flow diagram of the process of dividing the coverage area of the first cell into a plurality of logical grids and generating the coverage association information for each logical grid in the energy-saving control method provided by another embodiment of the present disclosure;
FIG. 6 is a flow diagram of the process of acquiring the grid positioning result in the energy-saving control method provided by one embodiment of the present disclosure;
FIG. 7 is a flow diagram of the process of generating the first target energy-saving policy in the energy-saving control method provided by one embodiment of the present disclosure;
FIG. 8 is a flow diagram of the process of determining that all second cells meet the preset energy-saving condition in the energy-saving control method provided by one embodiment of the present disclosure;
FIG. 9 is a flow diagram of the process of acquiring the total number of UEs accommodated by each second cell in the energy-saving control method provided by one embodiment of the present disclosure;
FIG. 10 is a schematic diagram of a network element used to implement the energy-saving control method in one embodiment of the present disclosure;
FIG. 11 is a schematic diagram of an application scenario of the energy-saving control method provided by one embodiment of the present disclosure;
FIG. 12 is a flow diagram of the energy-saving control method provided by another embodiment of the present disclosure;
FIG. 13 is a schematic diagram of the electronic device provided by one embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

It should be noted that, although the flow diagram shows a logical sequence, in some cases, the steps depicted or described can be performed in a different order than that shown in the flow diagram. The terms "first," "second," and similar terms used in the specification, claims, and the above drawings are used to distinguish similar objects and are not necessarily meant to describe a specific sequence or order.

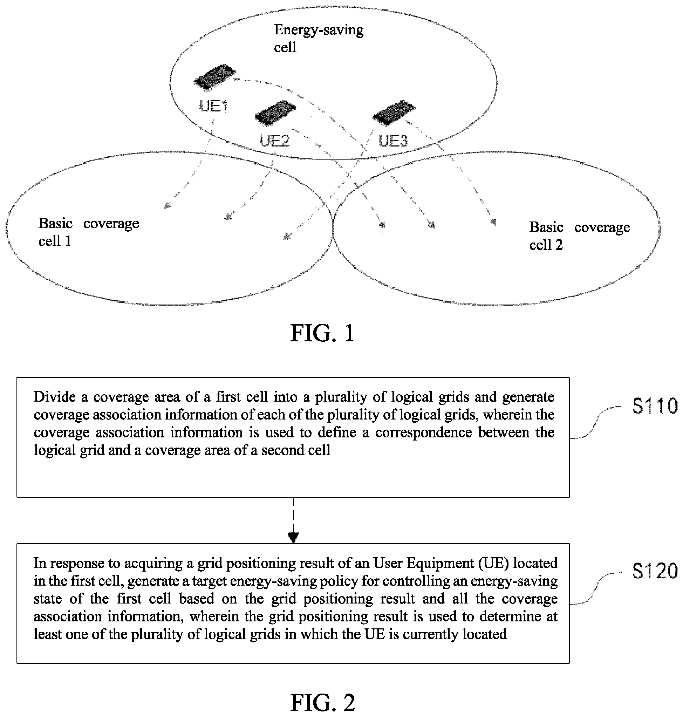

As shown in FIG. 1, in the related technology, there are UE1, UE2, and UE3 in an energy-saving cell. UE1 and UE2 are within the coverage area of the basic coverage cell 1, while UE3 is within the coverage area of the basic coverage cell 2. However, since the energy-saving cell does not know the actual location information of each UE, meaning that the energy-saving cell does not know to which basic coverage cell the UEs will migrate after the energy-saving cell shuts down, it may be necessary for both the basic coverage cell 1 and the basic coverage cell 2 to have sufficiently low loads to accommodate all three UEs before the energy-saving cell can enter the energy-saving state.

Based on this, the present disclosure provides an energy-saving control method, electronic device, and computer-readable storage medium. One embodiment of the energy-saving control method includes the following steps: dividing the coverage area of a first cell into a plurality of logical grids and generating coverage association information for each of the logical grids, the coverage association information is used to define the correspondence between the logical grid and the coverage area of a second cell; and in response to acquiring the grid positioning result of a User Equipment (UE) located in the first cell, generating a target energy-saving policy for controlling the energy-saving state of the first cell based on the grid positioning result and all the coverage association information, the grid positioning result is used to determine at least one of the plurality of logical grids in which the UE is currently located. In this embodiment, by dividing the coverage area of the first cell into multiple logical grids and generating coverage association information for each logical grid, the coverage area relationship between the first cell and the other relevant second cells can be determined based on the logical grids. Since the grid positioning result of the UE in the first cell can be used to determine which logical grid the UE is currently located in, combining the grid positioning result with all the coverage association information allows for determining whether the UE can migrate to the corresponding second cell. This enables the generation of an appropriate target energy-saving policy. In other words, it is only to check whether the second cell can accommodate the respective UE, which effectively reduces the difficulty of transitioning the first cell into the energy-saving state, thereby increasing the energy-saving duration of the first cell and filling the technical gap in the related methods.

The following is a further elaboration on the embodiments of the present disclosure in conjunction with the accompanying drawings.

As shown in FIG. 2, FIG. 2 is a flow diagram of an energy-saving control method provided in one embodiment of the present disclosure. This energy-saving control method may include, but is not limited to, steps of S110 to S120.

In a step of S110, a coverage area of a first cell is divided into a plurality of logical grids and coverage association information of each of the plurality of logical grids is generated, the coverage association information is used to define a correspondence between the logical grid and a coverage area of a second cell.

In this step, by dividing the coverage area of the first cell into multiple logical grids and generating coverage association information for each logical grid, the coverage relationship between the first cell and other related second cells can be established at the granularity of logical grids. This provides the basis for determining energy-saving migration for UEs in the first cell in subsequent steps, which helps reliably generate the target energy-saving policy.

In one embodiment, steps S110 to S120 may, but are not limited to, be applied in a wireless access network. They can be applied to scenarios where multi-frequency coverage (e.g., at least 2 layers) or multi-standard coverage (e.g., at least 2 layers) exists in the wireless network, or can be applied to scenarios selected by those having ordinary skill in the art. These steps are not limited by the specific scenario.

In one embodiment, the first cell refers to the cell to be energy-saved, which can be predetermined, while the second cell refers to other cells associated with the first cell. This can be one or more second cells. In practical applications, it is generally determined to be multiple second cells. In other words, when the first cell is determined, the second cells associated with it can also be identified. The types of the first and second cells are not limited; for example, both can be basic coverage cells. However, in this scenario, the first cell serves as the energy-saving basic coverage cell. Therefore, there is no strict distinction between the types of the first and second cells, and this is clarified.

In one embodiment, the second cell includes at least one of the following:
an inter-frequency basic coverage cell; or
an inter-system basic coverage cell.

In one embodiment, the type of the second cell can be set according to the application scenario, and this is not limited here.

In one embodiment, different logical grids correspond to different coverage areas of the first cell. For each logical grid, the correspondence with the coverage area of the second cell is not limited. In other words, multiple logical grids may correspond to the same coverage area of a second cell, or a single logical grid may correspond to multiple coverage areas of different second cells. For example, a logical grid may correspond to an overlapping coverage area of multiple second cells. This is not further elaborated here.

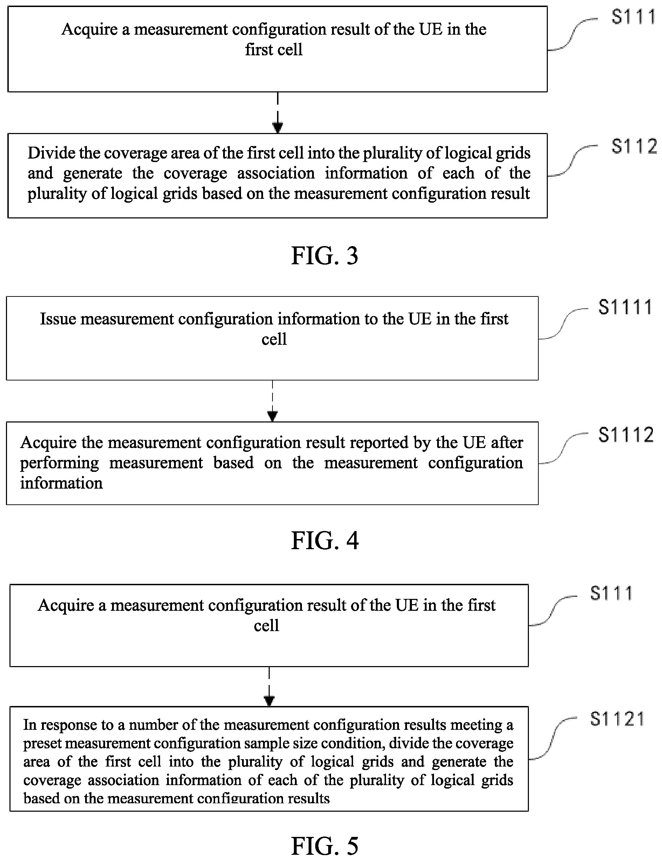

As shown in FIG. 3, in one embodiment of the present disclosure, the step of S110 is further explained. The step of S110 includes, but is not limited to, steps of S111 to S112.

In a step of S111, a measurement configuration result of the UE in the first cell is acquired.

In a step of S112, the coverage area of the first cell is divided into the plurality of logical grids and the coverage association information of each of the plurality of logical grids id generated based on the measurement configuration result.

In this step, by measuring each UE in the first cell to acquire the measurement configuration result, the coverage area information of the UE relative to other second cells is obtained. This allows the first cell's coverage area to be divided into multiple logical grids based on the measurement configuration result, and coverage association information for each logical grid can be generated. In other words, the number of logical grids to be divided can, but is not limited to, be determined based on the measurement configuration result of the UE.

In one embodiment, the number and type of UEs in the first cell are not limited. In practice, the UE may be any suitable type, such as, but not limited to, a user unit, user station, mobile station, mobile terminal, remote station, remote terminal, mobile device, user terminal, wireless communication device, user agent, or user device, etc. The form in which the UE appears in different application scenarios can vary. That is, the UE may be different in different application scenarios, and this is not limited here.

In one embodiment, the method of acquiring the measurement configuration result of the UE in the first cell can be varied, and this is not limited here. For example, the measurement configuration result of the UE may be obtained by performing basic coverage measurement in the first cell. This basic coverage measurement could include intra-frequency, inter-frequency, or inter-system measurements, or other suitable measurement configuration methods selected by those having ordinary skill in the art based on the application scenario.

As shown in FIG. 4, in one embodiment of the present disclosure, the step of S111 is further explained. The step of S111 includes, but is not limited to, steps of S1111 to S1112.

In a step of S1111, measurement configuration information is issued to the UE in the first cell.

In a step of S1112, the measurement configuration result reported by the UE after performing measurement based on the measurement configuration information is acquired.

In this step, by issuing measurement configuration information to the UE in the first cell, the UE performs measurements according to this information and reports the measurement results. This ensures that the measurement configuration results can be reliably obtained. In other words, the coverage association information can represent the information of inter-frequency basic coverage cells and inter-system basic coverage cells that can be measured by the coverage area corresponding to each logical grid. This includes the coverage area information of one or more second cells. It should be noted that the frequency and method of issuing measurement configuration information are not limited and can be selected according to the application scenario.

In one embodiment, the measurement configuration information includes:
intra-frequency periodic measurement configuration information, inter-frequency periodic measurement configuration information, inter-system periodic measurement configuration information.

Referring to FIG. 5, in one embodiment of the present disclosure, the step of S112 is further explained. The step of S112 includes, but is not limited to, step of S1121.

In a step of S1121, in response to the number of the measurement configuration results meeting a preset measurement configuration sample size condition, the coverage area of the first cell is divided into the plurality of logical grids and the coverage association information of each of the plurality of logical grids is generated based on the measurement configuration results.

In this step, the condition that the number of measurement configuration results meets the preset measurement configuration sample size ensures that the division of the first cell's coverage area into logical grids and the generation of coverage association information for each logical grid only occur when the number of measurement configuration results meets the required quantity. This guarantees that the measurement configuration results are sufficiently numerous to meet the measurement requirements, thereby improving the overall accuracy of the measurement configuration.

In one embodiment, the preset measurement configuration sample size condition can be set according to the scenario, and this is not limited here.

In a step of S120, In response to acquiring a grid positioning result of an User Equipment (UE) located in the first cell, a target energy-saving policy is generated for controlling an energy-saving state of the first cell based on the grid positioning result and all the coverage association information, the grid positioning result is used to determine at least one of the plurality of logical grids in which the UE is currently located.

In this step, by dividing the first cell, which is to be energy-saved, into multiple logical grids and generating coverage association information for each logical grid, the coverage relationship between the first cell and other related second cells can be determined based on the logical grids. Since the grid positioning result obtained from the UE in the first cell can be used to determine which logical grid the UE is currently located in, combining the grid positioning result with all the coverage association information allows for determining whether the UE can migrate to the corresponding second cell. This enables the generation of an appropriate target energy-saving policy. In other words, it is only necessary to check whether the second cell can accommodate the respective UE, which effectively reduces the difficulty of transitioning the first cell into the energy-saving state. This is beneficial for increasing the energy-saving duration of the first cell, thereby filling the technical gap in related methods.

In one embodiment, the UE can be located in one logical grid or in multiple logical grids. However, regardless of the scenario, since the coverage association information for each logical grid is used to represent the correspondence between the logical grid and the coverage area of the second cell, a comparison can be made for each logical grid based on its corresponding grid positioning result and all the coverage association information. This allows for accurately determining whether the second cell can accommodate the respective UE.

In one embodiment, the target energy-saving policy can involve any relevant operations to control the energy-saving state of the first cell. In other words, the target energy-saving policy can be presented as various operations to achieve the control of the energy-saving state of the first cell, and these operations fall within the scope of this embodiment. For example, the policy can include maintaining the current access state of the cell, shutting down the cell, etc. These are not limited here.

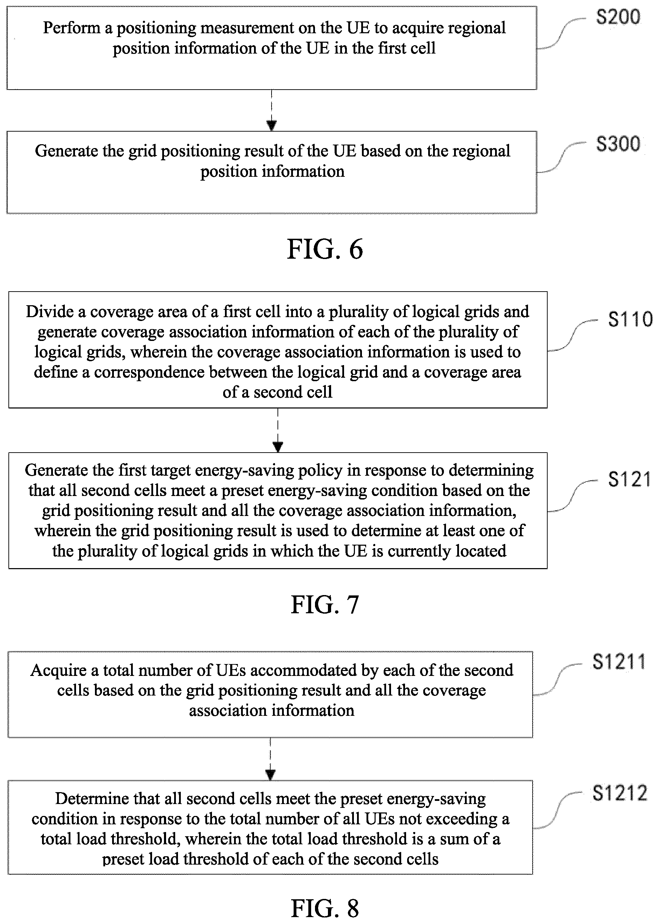

Referring to FIG. 6, in one embodiment of the present disclosure, the grid positioning result of the UE in the first cell in the step of S120 is further explained. This grid positioning result can, but is not limited to, be obtained through the following steps S200 to S300.

In a step of S200, a positioning measurement is performed on the UE to acquire regional position information of the UE in the first cell.

In a step of S300, the grid positioning result of the UE is generated based on the regional position information.

In this step, the UE is positioned through measurements to obtain its regional position information in the first cell. In other words, the specific position coordinates of the UE within the first cell are obtained, and based on these coordinates, it is determined which logical grids the UE is located in. By recording the content information of the corresponding logical grids, the grid positioning result of the UE can be obtained. This method enables the reliable and accurate establishment of the correspondence between the UE and the logical grids.

In one embodiment, various methods can be used to perform positioning measurements on the UE, and these are not limited here. For example, a network-assisted Global Navigation Satellite System (GNSS) positioning method, downlink positioning such as Observed Time Difference of Arrival (OTDOA), uplink Time Difference of Arrival (UTDOA), and other methods can be used.

Referring to FIG. 7, in one embodiment of the present disclosure, when the target energy-saving policy includes a first target energy-saving policy for controlling the first cell to enter an energy-saving state, the step of S120 is further explained. The step of S120 includes, but is not limited to, the step of S121.

In a step of S121, the first target energy-saving policy is generated in response to determining that all second cells meet a preset energy-saving condition based on the grid positioning result and all the coverage association information.

In this step, when it is determined, based on the grid positioning result and all the coverage association information, that all second cells meet the preset energy-saving condition, it confirms that the second cells can provide the necessary support for the energy-saving of the first cell. Therefore, under this condition, the first target energy-saving policy can be generated. In other words, if the second cells do not meet the preset energy-saving condition, the first target energy-saving policy will not be generated. In this case, further processing is required for the first cell to achieve energy savings. This allows for a more precise selection of which energy-saving cells need to be activated, reducing unnecessary or ineffective activations, which is beneficial for further increasing the energy-saving time of the energy-saving cells.

In one embodiment, the preset energy-saving condition can be selected based on the application scenario, such as load-bearing capacity conditions, service functionality conditions, etc., and this is not limited here.

In one embodiment, the first target energy-saving policy can involve any relevant operations for controlling the first cell to enter the energy-saving state. In other words, the first target energy-saving policy can be presented as various operations to control the first cell's entry into the energy-saving state. These operations fall within the scope of this embodiment and may include, for example, shutting down the cell, limiting external terminal access, etc. These are not limited here.

Referring to FIG. 8, in one embodiment of the present disclosure, when there are multiple UEs, the step of S121's "determining that all second cells meet a preset energy-saving condition based on the grid positioning result and all the coverage association information" is further explained, including but not limited to steps of S1211 to S1212.

In a step of S1211, a total number of UEs accommodated by each of the second cells is acquired based on the grid positioning result and all the coverage association information.

In a step of S1212, it is determined that all second cells meet the preset energy-saving condition in response to the total number of all UEs not exceeding a total load threshold, the total load threshold is a sum of a preset load threshold of each of the second cells.

In this step, the total number of UEs accommodated by each second cell is acquired, allowing the calculation of the total number of all UEs. Then, this total number is compared with the total load threshold, which is the sum of the preset load thresholds of each second cell. In other words, if the total number of all UEs does not exceed the total load threshold, all second cells can fully accommodate the migrating UEs. In this case, the first cell does not need to worry about the migration of its internal UEs and can enter an energy-saving state. It can also be seen that by determining, for each logical grid, which basic coverage cells (i.e., second cells) its UEs can migrate to, it is sufficient to aggregate and check if the second cells with coverage area relationships to these logical grids can accommodate the UEs, without requiring them to accommodate all the UEs in the first cell. This effectively reduces the difficulty of putting the first cell into an energy-saving state and is beneficial for extending its energy-saving duration.

In one embodiment, the preset load threshold of each second cell can be set independently without any correlation between them. That is, for different second cells, their respective preset load threshold values can be set based on factors such as the application scenario, cell characteristics, etc., and this is not limited here.

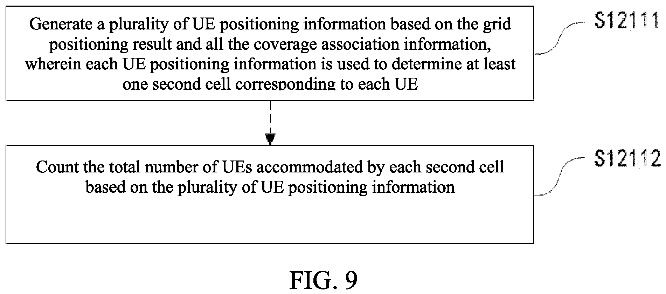

Referring to FIG. 9, in one embodiment of the present disclosure, the step of S1211 is further explained, and the step of S1211 includes, but is not limited to, steps of S12111 to S12112.

In a step of S12111, a plurality of UE positioning information are generated based on the grid positioning result and all the coverage association information, each UE positioning information is used to determine at least one second cell corresponding to each UE.

In a step of S12112, the total number of UEs accommodated by each second cell is counted based on the plurality of UE positioning information.

In this step, multiple UE positioning information is generated based on the grid positioning result and all coverage association information, which determines all second cells that each UE is matched to. For example, one UE might be matched to second cell 6, another UE to second cell 3, and another UE again to second cell 6. Then, by processing all the UE positioning information, the total number of UEs to be accommodated by each second cell can be calculated. This allows for further determination based on the total number of UEs each second cell needs to accommodate. For instance, for the three UEs mentioned above, second cell 3 may need to accommodate 1 UE, while second cell 6 may need to accommodate 1 + 1 = 2 UEs, and so on. Thus, the total number of UEs that each second cell may need to accommodate can be calculated and used for further processing.

In one embodiment, the UE positioning information may represent a scenario where the UE matches multiple second cells simultaneously. The method for counting the number is similar to the above embodiment, i.e., it can also adopt the counting method as described in the step of S12112, which is not repeated here.

To more accurately illustrate the working principles of the above embodiments, the following embodiments are provided to explain the working principles and flow of the above embodiments.

### Embodiment 1:

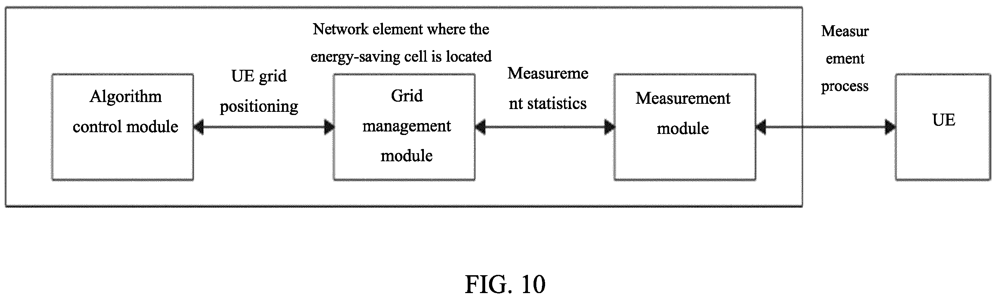

Referring to FIG. 10, FIG. 10 is a schematic diagram of a network element for performing the energy-saving control method according to one embodiment of the present disclosure. In this embodiment, the first cell is the energy-saving cell, and the basic coverage cell is the second cell.

The energy-saving control method is executed based on the network element where the energy-saving cell is located. The network element where the energy-saving cell is located includes:
a measurement module, configured to measure the UE to construct the logical grid of the energy-saving cell;
a grid management module, configured to perform grid positioning of all UEs within the energy-saving cell;
an algorithm control module, configured to perform algorithm detection to determine whether the energy-saving cell meets the energy-saving conditions.

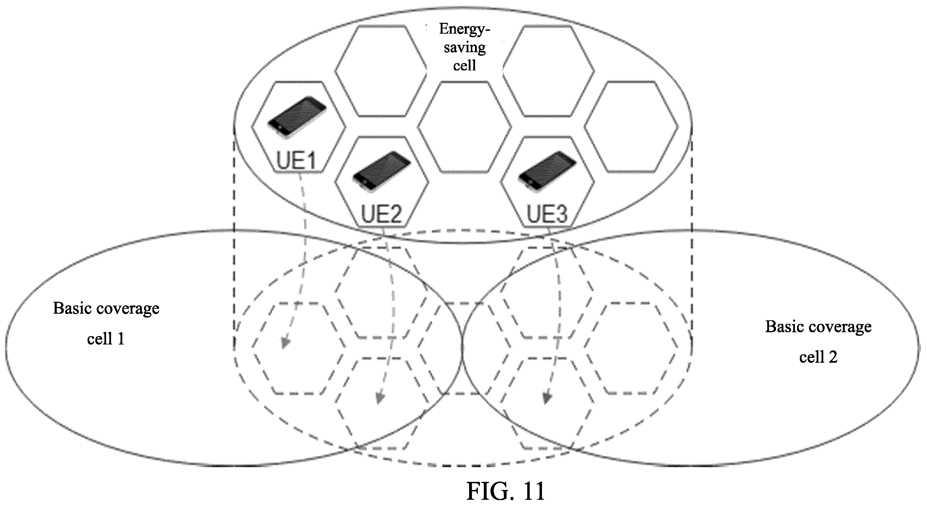

In some embodiments, as shown in FIG. 11, if there are UEs UE1, UE2, and UE3 in the energy-saving cell, where UE1 and UE2 are within the range of basic coverage cell 1, and UE3 is within the range of basic coverage cell 2, compared to the prior art, the present embodiment can identify the corresponding coverage areas for UE1, UE2, and UE3 from basic coverage cells 1 and 2 (as shown by the dashed hexagonal boxes in FIG. 11), through the cooperative application of the measurement module, grid management module, and algorithm control module. After confirming that basic coverage cells 1 and 2 can respectively accommodate UE1, UE2, and UE3, the energy-saving cell is controlled to enter an energy-saving state. UE1 and UE2 are migrated to basic coverage cell 1, and UE3 is migrated to basic coverage cell 2.

It can be seen that for different basic coverage cells, it is only necessary to summarize and determine whether they can accommodate UEs in logical grids related to their coverage area, without needing to accommodate all UEs in the energy-saving cell. Therefore, this effectively reduces the difficulty of the first cell entering an energy-saving state and helps increase its energy-saving duration.

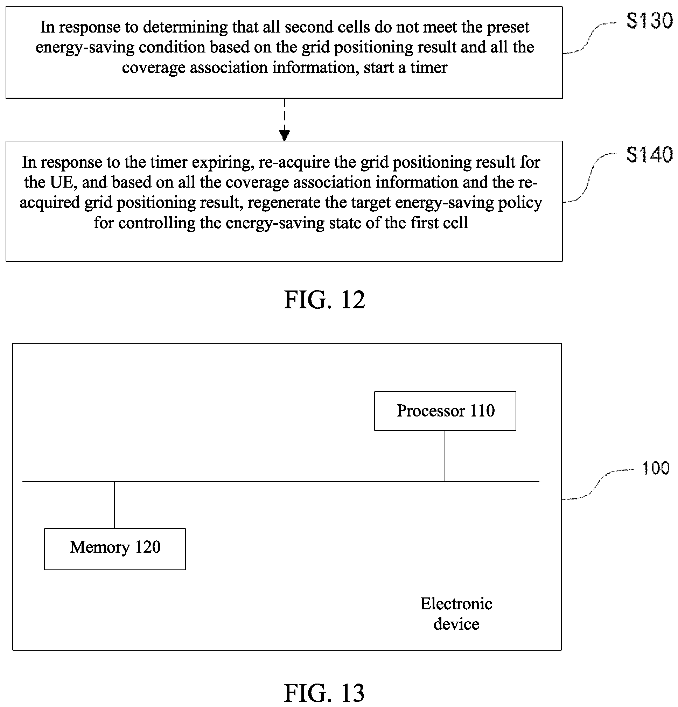

Referring to FIG. 12, one embodiment of the present disclosure also includes, but is not limited to, steps of S130 to S140.

In a step of S130, in response to determining that all second cells do not meet the preset energy-saving condition based on the grid positioning result and all the coverage association information, a timer is started.

In a step of S140, in response to the timer expiring, the grid positioning result for the UE is re-acquired, and based on all the coverage association information and the re-acquired grid positioning result, the target energy-saving policy for controlling the energy-saving state of the first cell is regenerated.

In this step, when it is determined that all second cells do not meet the preset energy-saving condition based on the grid positioning result and all coverage association information, it indicates that the first cell is not suitable to enter an energy-saving state at that time, as it would prevent all UEs in the first cell from being migrated and accommodated. Therefore, after waiting for a certain interval, the UE positioning can be re-performed and further processing can be carried out to ensure that all second cells meet the preset energy-saving condition, allowing the first cell to enter an energy-saving state.

In one embodiment, the delay time of the timer can be selected and set according to the scenario, and no specific limitation is imposed here.

It should be noted that, since the step of S140 in the present embodiment and the related embodiments of the energy-saving control method mentioned above belong to the same concept, the only difference is that the step of S140 is executed after a certain time interval. That is, S140 is actually similar to the related embodiments of the energy-saving control method described above. Therefore, other implementations and related embodiments of S140 in this embodiment can be referenced from the related embodiments of the energy-saving control method in the above-mentioned embodiments. To avoid redundancy, the other implementations and related embodiments of the step of S140 in this embodiment are not repeated here.

To more accurately explain the working principles of the above embodiments, the following embodiments are provided to illustrate the working principles and flow of the above embodiments.

### Embodiment 2:

For the energy-saving control method of the present application, based on the method in Embodiment 1, one process is executed according to the following steps:
Firstly, for an energy-saving cell, within the energy-saving cell, the UE (User Equipment) is issued with intra-frequency periodic measurement, inter-frequency periodic measurement, and inter-system periodic measurement, and the measurement results are collected. Once the sample size of the measurement results meets the preset requirement, a grid construction algorithm is executed to construct a logical grid for the energy-saving cell. Each logical grid corresponds to the information of the inter-frequency basic coverage cell and inter-system basic coverage cell that can be measured within its coverage area.

Then, the grid construction module is triggered to perform grid positioning for all UEs within the energy-saving cell and determine which logical grid each UE is located in. Each logical grid is individually examined to determine which basic coverage cell the UE within that grid can migrate to. Based on the summary of all UEs' grid positioning results, the load of UEs that each basic coverage cell needs to accommodate is determined. Based on the expected load of UEs that each basic coverage cell should accommodate, it is then determined whether all basic coverage cells can accommodate the corresponding UE load.

The above determination method can be as follows:
For a UE (i), record the grid positioning results qi, including the logical grid identifier G(i), and the set of basic coverage cell maintained by the logical grid, C(i). The corresponding relationship between the UE (i) and the basic coverage cell is recorded, i.e., for each UE (i), it is determined which basic coverage cells it falls within the coverage range of. UE (i) refers to any UE within the energy-saving cell.

Once all UEs have been located, merge the C(i) from all UE positioning results, removing duplicates to obtain the set of basic coverage cells, BC. For each basic coverage cell BC(j) in BC, find all the UEs within its coverage range, denoted as BC_UE(j). BC_UE(j) represents the set of UEs that the basic coverage cell BC(j) needs to accommodate when the energy-saving cell is closed.

By determining which UEs each basic coverage cell needs to accommodate, it is predicted that the business load of these UEs will migrate from the energy-saving cell to the corresponding basic coverage cell when the energy-saving cell is shut down. In other words, it is determined whether each basic coverage cell can accommodate the expected load of migrating UEs. If so, it is considered that the energy-saving conditions are met, and the general process for shutting down the energy-saving cell is executed (this process is not detailed here). If not, energy-saving testing and energy-saving condition assessment can continue after a certain interval. This means that if a basic coverage cell does not meet the preset energy-saving conditions, further processing of the energy-saving cell is needed to achieve energy savings. This approach allows for more precise selection of energy-saving cells that need to be awakened, reducing unnecessary and ineffective awakenings, thereby further increasing the energy-saving time of the energy-saving cell.

It can be seen that for different basic coverage cells, it is to aggregate and determine whether the UE in the logical grids related to its coverage area can be accommodated, without needing to accommodate all UEs from the first cell. This effectively reduces the difficulty of putting the first cell into energy-saving state and helps to extend its energy-saving duration.

In summary, by dividing the first cell into multiple logical grids and generating coverage association information for each logical grid, the coverage relationship between the first cell and other relevant second cells can be determined based on the logical grids. Since the grid positioning result of the UEs in the first cell can be used to determine the logical grid in which the UE is located, the grid positioning result combined with all coverage association information can be used to determine whether the UE can be migrated to the corresponding second cell. This allows the generation of an appropriate target energy-saving policy. That is, it is only necessary to determine whether the second cell can accommodate the corresponding UEs. This effectively reduces the difficulty of the first cell entering an energy-saving state and helps increase the energy-saving duration of the first cell, thus filling the technological gap in the related methods.

Additionally, as shown in FIG. 13, one embodiment of the present disclosure also discloses an electronic device 100, which includes: at least one processor 110; at least one memory 120, configured to store at least one program; and when the at least one program is executed by the at least one processor 110, the energy-saving control method described in the previous embodiments is implemented.

Furthermore, one embodiment of the present disclosure also discloses a computer-readable storage medium, which stores computer-executable instructions. The computer-executable instructions are used to perform the energy-saving control method described in any of the previous embodiments.

In addition, one embodiment of the present disclosure also discloses a computer program product, which includes a computer program or computer instructions stored in a computer-readable storage medium. A processor of a computer device reads the computer program or instructions from the computer-readable storage medium and executes the program or instructions, causing the computer device to perform the energy-saving control method described in any of the previous embodiments.

In the embodiments of the present disclosure, by dividing the first cell to be energy-saved into multiple logical grids and generating coverage association information for each logical grid, the coverage relationship between the first cell and other related second cells can be determined based on the logical grids. Since the grid positioning result of the UEs in the first cell can be used to determine the logical grid in which the UE is located, combining the grid positioning results with all coverage association information can then determine whether the UE can be migrated to the corresponding second cell. This enables the generation of an appropriate target energy-saving policy. That is, it is only necessary to determine whether the second cell can accommodate the corresponding UEs. This effectively reduces the difficulty of the first cell entering an energy-saving state, helps increase its energy-saving duration, and thereby fills the technological gap in related methods.

Those having ordinary skill in the art will understand that all or some of the steps and systems in the disclosed methods can be implemented in software, firmware, hardware, or an appropriate combination thereof. Some or all of the physical components can be implemented as software executed by a processor, such as a central processing unit (CPU), a digital signal processor (DSP), or a microprocessor, or as hardware, or as an integrated circuit, such as an application-specific integrated circuit (ASIC). Such software can be distributed across a computer-readable medium, which can include computer storage media (or non-transitory media) and communication media (or transient media). As is well known to those having ordinary skill in the art, the term "computer storage media" refers to volatile and non-volatile, removable and non-removable media implemented by any method or technique used for storing information, such as computer-readable instructions, data structures, program modules, or other data. Computer storage media includes, but is not limited to, RAM, ROM, EEPROM, flash memory or other memory technologies, CD-ROM, digital versatile discs (DVD), or other optical disc storage, magnetic cassettes, magnetic tape, disk storage, or other magnetic storage devices, or any other medium that can be used to store desired information and can be accessed by a computer. Additionally, as is well known to those having ordinary skill in the art, communication media typically embodies computer-readable instructions, data structures, program modules, or other data in a modulated data signal, such as a carrier wave or other transmission mechanisms, and can include any information delivery medium.

## Claims

1. An energy-saving control method, comprising:
dividing a coverage area of a first cell into a plurality of logical grids and generating coverage association information of each of the plurality of logical grids, wherein the coverage association information is used to define a correspondence between the logical grid and a coverage area of a second cell; and
in response to acquiring a grid positioning result of an User Equipment (UE) located in the first cell, generating a target energy-saving policy for controlling an energy-saving state of the first cell based on the grid positioning result and all the coverage association information, wherein the grid positioning result is used to determine at least one of the plurality of logical grids in which the UE is currently located.

2. The energy-saving control method of claim 1, wherein the target energy-saving policy comprises a first target energy-saving policy for controlling the first cell to enter an energy-saving state; generating a target energy-saving policy for controlling an energy-saving state of the first cell based on the grid positioning result and all the coverage association information comprises:
generating the first target energy-saving policy in response to determining that all second cells meet a preset energy-saving condition based on the grid positioning result and all the coverage association information.

3. The energy-saving control method of claim 2, wherein a plurality of UEs are comprised; determining that all second cells meet a preset energy-saving condition based on the grid positioning result and all the coverage association information comprises:
acquiring a total number of UEs accommodated by each of the second cells based on the grid positioning result and all the coverage association information; and
determining that all second cells meet the preset energy-saving condition in response to the total number of all UEs not exceeding a total load threshold, wherein the total load threshold is a sum of a preset load threshold of each of the second cells.

4. The energy-saving control method of claim 3, wherein acquiring a total number of UEs accommodated by each of the second cells based on the grid positioning result and all the coverage association information comprises:
generating a plurality of UE positioning information based on the grid positioning result and all the coverage association information, wherein each UE positioning information is used to determine at least one second cell corresponding to each UE; and
counting the total number of UEs accommodated by each second cell based on the plurality of UE positioning information.

5. The energy-saving control method of claim 2, wherein the method further comprises:
in response to determining that all second cells do not meet the preset energy-saving condition based on the grid positioning result and all the coverage association information, starting a timer; and
in response to the timer expiring, re-acquiring the grid positioning result for the UE, and based on all the coverage association information and the re-acquired grid positioning result, regenerating the target energy-saving policy for controlling the energy-saving state of the first cell.

6. The energy-saving control method of claim 1, wherein dividing a coverage area of a first cell into a plurality of logical grids and generating coverage association information of each of the plurality of logical grids comprises:
acquiring a measurement configuration result of the UE in the first cell; and
dividing the coverage area of the first cell into the plurality of logical grids and generating the coverage association information of each of the plurality of logical grids based on the measurement configuration result.

7. The energy-saving control method of claim 6, wherein acquiring a measurement configuration result of the UE in the first cell comprises:
issuing measurement configuration information to the UE in the first cell; and
acquiring the measurement configuration result reported by the UE after performing measurement based on the measurement configuration information.

8. The energy-saving control method of claim 7, wherein the measurement configuration information comprises:
intra-frequency periodic measurement configuration information, inter-frequency periodic measurement configuration information, or inter-system periodic measurement configuration information.

9. The energy-saving control method of claim 6, wherein dividing the coverage area of the first cell into the plurality of logical grids and generating the coverage association information of each of the plurality of logical grids based on the measurement configuration result comprises:
in response to a number of the measurement configuration results meeting a preset measurement configuration sample size condition, dividing the coverage area of the first cell into the plurality of logical grids and generating the coverage association information of each of the plurality of logical grids based on the measurement configuration results.

10. The energy-saving control method of claim 1, wherein the grid positioning result of the UE in the first cell is acquired based on the following steps:
performing a positioning measurement on the UE to acquire regional position information of the UE in the first cell; and
generating the grid positioning result of the UE based on the regional position information.

11. The energy-saving control method of claim 1, wherein the second cell comprises at least one of:
an inter-frequency basic coverage cell; or
an inter-system basic coverage cell.

12. An electronic device, comprising at least one processor, and at least one memory storing at least one program which, when executed by the at least one processor, causes the at least one processor to carry out the energy-saving control method of any one of claims 1 to 11.

13. A computer-readable storage medium, storing a processor-executable program which, when executed by a processor, causes the processor to carry out the energy-saving control method of any one of claims 1 to 11.
